# EUROPEAN PATENT SPECIFICATION

(11) **EP 1 693 416 B1**
(45) Date of publication and mention of the grant of the patent: **20.10.2010**
(21) Application number: 04819854.3
(22) Date of filing: 01.12.2004
(51) Int. Cl.: C08L 67/04, C08K 7/02

(54) **POLY(3-HYDROXYALKANOATE) COMPOSITION AND MOLDED OBJECT THEREOF**
POLY(3-HYDROXYALKANOAT)-ZUSAMMENSETZUNG UND FORMKÖRPER DARAUS
COMPOSITION DE POLY(3-HYDROXYALCANOATE) ET OBJET MOULE COMPRENANT CETTE COMPOSITION

(30) Priority: 02.12.2003 JP 2003403572
(43) Date of publication of application: 23.08.2006
(73) Proprietor: KANEKA CORPORATION, Osaka-shi, Osaka 530-8288 (JP)
(72) Inventor: HIROSE, Fuminobu, 5660072 (JP); MIYAGAWA, Toshio, 5660022 (JP); SENDA, Kenichi c/o Osaka-Factory, Settsu-shi, Osaka 5660072 (JP); NODA, Yasushi c/o Osaka-Factory, Settsu-shi, Osaka 5660072 (JP)
(74) Representative: Hart-Davis, Jason
(86) International application number: PCT/JP2004/017848
(87) International publication number: WO 2005/054366

(56) References cited:
- JP-A- 11 323 116
- JP-A- 2002 356 562
- JP-A- 2004 331 757
- DATABASE WPI Week 200242 Derwent Publications Ltd., London, GB; AN 2002-388154 XP002406295 & JP 2002 069303 A (IBB YG) 8 March 2002 (2002-03-08)

## Description

### TECHNICAL FIELD

The present invention relates to a plant origin composition and a molded product thereof excellent in processability, strength, impact resistance, heat resistance and water resistance. Further, the invention relates to a composition and a molded product thereof which, when discarded, are decomposed under the action of microorganisms and the like in an aerobic or anaerobic environment and are returned to the carbon cycle system on the earth. Furthermore, the invention relates to a plant origin composition and a molded product thereof, which can positively absorb carbon dioxide and convert the same into carbohydrates by photosynthesis, and can be expected to contribute to the prevention of global warming.

### BACKGROUND ART

Plastics have so far been thrown away after use in view of the ease of molding and using, the difficulty in reusing, the sanitary aspect thereof, and the like. However, as a result of the use and discard of large amounts of plastics, problems associated with the disposal thereof by landfill or incineration are getting a great deal of attention. The problems are shortage of landfill sites, influences of nondegradable plastics remaining in the environment on the ecosystem, hazardous gas generation upon incineration, global warming due to immense quantities of heat of combustion and other heavy loads on the global environment. Therefore, in recent years, a number of studies have been made to develop biodegradable plastics which may possibly dissolve the problems associated with waste plastics.

Generally, biodegradable plastics are roughly classified into three categories, namely, (1) aliphatic polyesters produced by microorganisms such as polyhydroxyalkanoates, (2) chemically synthesized aliphatic polyesters such as polylactic acid and polycaprolactone, and (3) natural polymers such as starch and cellulose acetate.

The chemically synthesized aliphatic polyesters are mostly insusceptible to anaerobic decomposition, hence, in discarding them, the degradation conditions are restricted; for polylactic acid and polycaprolactone, there is the problem of heat resistance. Starch also has problems; it is non-thermoplastic, brittle, and poor in water resistance.

On the other hand, among the polyhydroxyalkanoates, poly(3-hydroxyalkanoates) (abbreviation: P3HAs), in particular, have such excellent characteristics as follows: they have good degradability under aerobic as well as anaerobic environment conditions, cause no hazardous gas generation upon combustion, are plastics derived from microorganisms utilizing plant materials, can acquire high molecular weights, and have outstanding features, namely they will never increase the carbon dioxide level on the earth and they are carbon neutral. Although the P3HAs are classified as aliphatic polyesters, they differ markedly, in polymer properties, from those chemically synthesized aliphatic polyesters or natural polymers mentioned above. Their degradability under anaerobic conditions, their good water resistance and the possibility of acquiring high molecular weights are their performance characteristics worthy of special mention. In cases where the P3HA is a copolymer, its physical properties, such as melting point, heat resistance and flexibility, can be modified by controlling the composition ratio of the constituent monomers. Among the P3HAs, polyhydroxybutyrate

(abbreviation: PHB) has highest heat resistance since it has high melting point and crystallinity.

As mentioned above, polyhydroxyalkanoates are composed of plant origin materials, can solve the waste problems and are highly ecofriendly. Therefore, it is desired that they be used in the form of moldings applicable as packaging materials, tableware materials, building, civil engineering, agricultural and horticultural materials, car upholstery materials, adsorption, carrier/support and filter materials, etc.

On the other hand, the P3HAs have two serious problems about their processability. One problem is poor processability due to the slow rates of crystallization, and the other is molecular weight decrease resulting from thermal degradation upon heating at high temperatures. Among the P3HAs, PHB has a melting point as high as about 175°C and thus requires a high processing temperature, so that it is very susceptible to thermal degradation during processing with heating and moldings thereof undergo molecular weight decreases; thus, while it appears to have high heat resistance, it tends to give brittle moldings. As regards poly(3-hydroxybutyrate-co-3-hydroxyhexanoate) (abbreviation: PHBH), an increase in the proportion of hexanoate among the copolymerization components results in a reduction in melting point, hence in a decrease in the temperature for processing with heating; thus, it can be processed while its thermal degradation being suppressed, and the processing can be effected while its molecular weight being maintained. However, an increased hexanoate proportion results in a decrease in the melting point, hence relative reductions in heat resistance tend to result. On the other hand, as for the P3HAs, a number of investigations have been made concerning the addition of nucleating agents for improving the slow rates of crystallization, and inorganic substances such as boron nitride, ammonium chloride and talc are well known as such agents. However, no attempts have been made to use vegetable fiber-derived additives as nucleating agents. No detailed studies have been made to improve the heat resistance of P3HAs using vegetable fiber-derived additives without making variations in copolymer composition.

Meanwhile, it is an old knowledge to admix plant fibers, for example waste paper pulp, with plastics. Since the first oil crisis, various forms of plant fibers have been used mainly for the purpose of extending plastics and, in recent years, they have been studied as extenders, process aids or heat resistance improvers for rendering chemically synthesized aliphatic polyesters inexpensive (Japanese Kokai Publications 2001-335710, 2002-356562, 2002-69303, Hei-10-273582, Hei-11-315197, Hei-09-169897, Hei-06-345944, and Hei-05-39412). For example, it is described that products obtained from polyethylene succinate resins, which are chemically synthesized aliphatic polyesters, through a number of steps comprising admixing a large amount of hemp fibers or the like therewith in water, molding the mixture into sheets, dewatering, compressing and drying the sheets and further pressing the same at a high temperature show improved heat resistance (Japanese Kokai Publication Hei-09-169897). Further, it is described that admixing of plant fibers with chemically synthesized aliphatic polyesters makes the moldings produced from the mixtures susceptible to cracking upon contacting with water due to swelling of the fibers, hence susceptible to biodegradation. However, there is a fear of fracture of moldings as resulting from water absorption in actual use thereof, thus it is unfavorable (Japanese Kokai Publication Hei-10-273582). According to a paper (Preprints for the 14th Annual Meeting of the Japan Society of Polymer Processing (published on June 2, 2003)) recently presented at the conference of a scientific society, admixing of bamboo fibers, carbonized bamboo fibers or surface-treated bamboo fibers with polybutylene succinate, which is a chemically synthesized polyester, results in improvements in tensile modulus, flexural modulus and maximum bending strength but rather produces such problems as decreases in tensile strength and impact resistance. Other problems are also disclosed, namely when kenaf fibers are admixed with polylactic acid, which is a chemically synthesized aliphatic polyester, the maximum bending strength and impact resistance become reduced, although the heat resistance is improved, crystallization promoting effects are produced and the flexural modulus is improved. In this manner, the addition of plant fibers to most of chemically synthesized aliphatic polyesters improves the strength and heat resistance but tends to reduce the impact resistance. This is considered to be due to insufficient interfacial adhesion between polyesters and plant fibers.

JP-11-323116 discloses a biodegradable molding material obtained by compounding an aliphatic polyester, containing at least 50 wt.% resin containing 3-hydroxybutyric acid units, with glass fibers.

Further, glass fibers, which are used as reinforcements for plastics in general, remain as such on the occasion of waste disposal by incineration. Therefore, attempts have been made to use plant fibers as substitutes therefor. Since, however, they are poor in interfacial adhesion to plastics, they are subjected to surface treatment prior to use. Plant fibers are surface-treated with silane coupling agents, glyoxal, and the like. Desirable, however, they are to be used without surface treatment, if possible.

Furthermore, the Kyoto Protocol setting target figures for reduced carbon dioxide emission will probably become effective, and substances absorbing carbon dioxide and converting the same into carbohydrates (fixation of carbon dioxide) and showing global warming preventing effects have attracted very great attention. It is desirable that such substance be used positively.

### SUMMARY OF THE INVENTION

It is an object of the present invention to provide a composition and a molded product thereof excellent in processability, strength, impact resistance, heat resistance and water resistance and, when discarded, are biodegradable under the action of microorganisms and the like in an aerobic or anaerobic environment and, further, a plant origin composition and a molded product thereof, which can positively fix carbon dioxide on the earth. Such characteristics can hardly be attained with the above-mentioned chemically synthesized aliphatic polyesters or natural polymers such as starch.

The present inventors have made intensive investigations to accomplish the above object, and as a result, they found that when a composition is prepared by admixing kenaf fibers with a specific P3HA produced by microorganisms, the composition is improved in rate of crystallization, heat resistance, elastic modulus, strength and impact resistance. Further, they found that when the percentage of the area occupied by kenaf fibers on the molded product surface is within a specific range, the product shows excellent water resistance. Such and other findings have led to completion of the present invention.

### DETAILED DECRIPTION OF THE INVENTION

Thus, in a first aspect, the present invention relates to
a composition
which comprises kenaf fibers and a poly(3-hydroxyalkanoate) (abbreviation: P3HA) produced by microorganisms and comprising a repeating unit represented by the formula (1):

[-O-CHR-CH₂-CO-]

in the formula, R represents an alkyl group represented by CₙH₂ₙ₊₁ with n representing an integer of 1 to 15.

In a preferred embodiment, the invention relates to the above composition
wherein the P3HA is poly(3-hydroxybutyrate-co-3-hydroxyhexanoate) comprising a repeating unit of the above formula (1) with, in R, n = 1 and 3.

More preferably, the invention relates to
the above composition
wherein the copolymer component composition ratio in the poly(3-hydroxybutyrate-co-3-hydroxyhexanoate) is 3-hydroxybutyrate/3-hydroxyhexanoate = 99/1 to 80/20 (mol/mol);
still more preferably to
the above composition
wherein the kenaf fibers account for 1 to 70% by weight and the P3HA accounts for 99 to 30% by weight based on the whole composition;
further preferably to
the above composition
wherein the maximum fiber length of the kenaf fibers is not longer than 20 mm;
most preferably to
the above composition
wherein the DSC curve drawn by differential scanning calorimetry shows an exothermic peak due to crystallization in the case where the temperature is lowered from a level higher by 30°C than the melting point of the P3HA alone at a rate of 10°C/minute, and the heat deformation temperature (Tₕ) of the P3HA alone and the heat deformation temperature (T_{h*}) of the composition comprising the kenaf fibers and the P3HA as determined for the respective samples prepared under the same conditions show the relation T_{h*} > Tₕ.

In a second aspect, the invention relates to
the above composition
wherein the flexural modulus value, maximum bending strength value and IZOD impact value thereof are not lower than the corresponding values for a P3HA alone having a weight average molecular weight (Mw) falling within the range of ± 10% of the weight average molecular weight (Mw) of the composition comprising the kenaf fibers and the P3HA.

In a third aspect, the invention relates to
an injection-molded product
which comprises the above composition. In a preferred embodiment, the invention relates to
the above injection-molded product
wherein the flexural modulus value, maximum bending strength value and IZOD impact value thereof are not lower than the corresponding values for a P3HA alone having a weight average molecular weight (Mw) falling within the range of ± 10% of the weight average molecular weight (Mw) of the composition comprising the kenaf fibers and the P3HA.

In a fourth aspect, the invention relates to
a film- or sheet-shaped molded product
which comprises the above composition, or a press-molded product using the same.

In a fifth aspect, the invention relates to
a molded product
which comprises the above composition, the percentage of the area occupied by the kenaf fibers on the molded product surface being not more than 50%.

First, the composition of the invention is described.

The composition of the invention is a composition which comprises kenaf fibers and a poly(3-hydroxyalkanoate) produced by microorganisms and comprising a repeating unit represented by the formula (1):

[-Q-CHR-CH₂-CO-]

in the formula, R represents an alkyl group represented by CₙH₂ₙ₊₁ with n representing an integer of 1 to 15.

The poly(3-hydroxyalkanoate) to be used in the practice of the invention is an aliphatic polyester which comprises a repeating structure comprising a 3-hydroxyalkanoate represented by the above formula (1) and is produced by microorganisms.

The microorganisms are not particularly restricted but may be any of those capable of producing the poly(3-hydroxyalkanoate).

The P3HA to be used in the practice of the invention specifically includes homopolymers of the above-mentioned 3-hydroxyalkanoate; copolymers of a combination of two or more of the above-mentioned 3-hydroxyalkanoates, namely di-copolymers, tri-copolymers, tetra-copolymers, etc.; blends of two or more species selected from among such homopolymers and copolymers; and the like.

Preferably employable among them are homopolymers of 3-hydroxybutyrate in which n = 1 in the alkyl group R, 3-hydroxyvalerate in which n = 2, 3-hydroxyhexanoate in which n = 3, 3-hydroxyoctanoate in which n = 5, 3-hydroxyoctadecanoate in which n = 15, and the like; copolymers of a combination of two or more such 3-hydroxyalkanoate units, namely di-copolymers, tri-copolymers; and blends of these.

More preferred are copolymers of 3-hydroxybutyrate (also called 3HB) in which n = 1 and 3-hydroxyhexanoate (also called 3HH) in which n = 3, namely poly(3-hydroxybutyrate-co-3-hydroxyhexanoate) (also called P(3HB-co-3HH) or PHBH). Still more preferred are such species with a 3-hydroxybutyrate/3-hydroxyhexanoate composition ratio of 99/1 to 80/20 (mol/mol).

In the present specification, the names composed of monomer names connected by -co- indicate the copolymers of the corresponding monomers.

The kenaf fiber to be used in accordance with the invention is a fiber of kenaf which is an annual herb of the genus Hibiscus of the family Malvaceae and is also called white hibiscus.

Species of kenaf are roughly classified into two, namely Hibiscus sabdariffa and Hibiscus cannabinus, which are also called Tai kenaf and Cuba kenaf, respectively. In Japan, they are known by the names Seihi Nos. 1 to 5, Jindai No. 1, Cuban, Tainung 1 to 2, Everglades 41, Whiten, Non Soon 1 to 2, Keaw Yai, Khon Kaen 50 to 60, Roslle, Okra, Tororoaoi, Etsuo No. 1, etc.

The kenaf to be used in the practice of the invention is not particularly restricted with respect to species or strain or place of production. From the availability viewpoint, however, Hibiscus cannabinus is preferred.

Kenaf grows very rapidly; the circumference of the stem arrives at 2 to 10 cm and the height at 3 to 5 m in half a year. Thus, high yields can be produced in a short time and the fiber yield per unit area is high. Kenaf can grow in acid soil and highly salty soil as well and, therefore, is cultivated widely in Africa, Southeast Asia, China, India, Russia, Caribbean Nations, South America and elsewhere. In recent years, it has been successfully cultivated in Japan as well.

Furthermore, kenaf is expected to have the effect of carbon dioxide fixation.

The stem of kenaf is constituted of a bark fiber-containing bast portion and a central core portion, which differ in properties from each other. The bast portion accounts for 30% of the stem of kenaf and the fibers obtained from the bast portion are long and excellent in strength. The kenaf bast-derived fibers have a tensile strength of about 480 MPa and a tensile modulus of about 18 GPa. The core portion accounts for 70% of the kenaf stem and, when ground, for instance, it gives short fibers and/or a powder. From the moldability and/or physical property improvement viewpoint, the kenaf bast-derived fibers are preferably used in the practice of the invention, although the core portion-derived short fibers or powder can also be used as extenders.

Since kenaf fibers are basically hygroscopic, they are preferably dried prior to admixture with P3HAs. The drying may be carried out in an adequate manner to a level which will not allow the formation of bubbles due to vaporization of moisture in the step of molding the composition with heating. When they are in an appropriately dry condition, they can be opened with ease in the step of kneading with the resin. When, however, the drying is carried out under conditions possibly causing degeneration and reduction in number of free hydroxyl groups in the kenaf fiber-forming cellulose molecules (e.g. several hours in an environment at 200°C or above), the affinity for and adhesion to P3HAs tend to decrease easily.

The kenaf fiber length before kneading is not particularly restricted. Generally, however, it is preferably not longer than 10 cm, although the length may be appropriately adjusted according to the capacity of the kneader. When the fiber length is longer than 10 cm, it may possibly become difficult to charge the kneader with the fibers because of their bulkiness or may become difficult to disentangle fiber bundles in some cases. The kenaf fibers in the resulting composition are cut into an adequate length of not longer than 10 cm and dispersed by shearing in the kneader.

The composition of the invention which comprises kenaf fibers and a P3HA preferably has a kenaf fiber content of not lower than 1% by weight, more preferably 1% by weight to 70% by weight, based on the whole composition. When the kenaf fiber content is lower than 1% by weight, various effects (e.g. effects as a crystallization promoting agent, heat resistance improving agent or impact resistance improving agent) producible by the addition of kenaf fibers tend to be weakened. When the kneading is carried out in an open system using a roll molding machine, for instance, it is possible to add kenaf fibers in large amounts. When the kneading is performed using an extrusion molding machine, however, a kenaf fiber content exceeding 70% by weight causes an increase in viscosity of the kneaded composition. Thus, the composition may not function as a thermoplastic resin any longer or it becomes difficult in some cases to stably obtain the desired extrusion composition. When, however, a P3HA having a lower molecular weight and showing a low viscosity is used or a plasticizer and/or a lubricant and/or another low-viscosity resin, for instance, is admixed, it is also possible to lighten the load on the extrusion molding machine and thereby obtain the desired composition.

Particularly, preferred are those compositions in which kenaf fibers account for 1 to 70% by weight and a P3HA accounts for 99 to 30% by weight, based on the whole composition.

In the composition of the invention which is obtained from kenaf fibers and a P3HA, the maximum fiber length of the kenaf fibers is preferably not longer than 20 mm.

When the maximum fiber length is longer than 20 mm, some kenaf fibers may be partly peeled off on the occasion of film processing, etc. making the surface fluffy, or the area of exposure on the surface may increase, or the effect as a crystallization promoting agent may become insignificant, according to circumstances.

"The maximum fiber length" as used herein refers to the length of the longest portion of one kenaf fiber bundle as observed in the composition or a molded product obtained from the composition, and the maximum length found upon observation of a total area of at least 400 mm² is taken as the maximum fiber length of the kenaf fibers. The specific measurement method is as described in the examples section described later herein.

In cases where the probability of occurrence of kenaf fibers (bundles) longer than 20 mm is one such fiber bundle per 10 fiber bundles in the observation range, the maximum fiber length in question is judged to be longer than 20 mm.

The composition of the invention which is obtained from kenaf fibers and a P3HA preferably gives a DSC curve, when drawn by differential scanning calorimetry for crystallization/solidification (nucleating agent) behavior evaluation by lowering the temperature from a level higher by 30°C than the melting point of the P3HA alone at a rate of 10°C/minute, showing an exothermic peak due to crystallization. In that case, the kenaf fibers preferably serve as a nucleating agent. In case of a P3HA copolymer with an increased proportion of a melting point-lowering copolymer component, in particular, the rate of crystallization may become slow and the processability may become deteriorated in the step of processing with heating at high temperatures in certain cases.

More specifically, in case of PHBH, for instance, the melting point of PHBH whose 3-hydroxyhexanoate unit content is 8 mole% based on the whole PHBH is 140°C ± 15°C (the melting point of PHB homopolymer being about 175°C). When the copolymer is heated to 200°C for melting the same and then cooled at a rate of 10°C/minute for crystallization/solidification (nucleating agent) behavior evaluation by differential scanning calorimetry, as mentioned above, there appears no exothermic peak due to recrystallization. When kenaf fibers are added, however, there appears an exothermic peak due to crystallization during cooling, indicating that kenaf fibers have a crystallization-promoting effect, namely a nucleating agent effect.

When the 3-hydroxyhexanoate unit content is 3 mole% based on the whole PHBH, the melting point is 150°C ± 15°C and, when the PHBH is melted at 200°C and then cooled for the above crystallization/solidification behavior evaluation, an exothermic peak (indicating recrystallization) may appear in some cases, indicating that some copolymerization ratios facilitate crystallization without addition of kenaf fibers. Even when the 3-hydroxyhexanoate unit content is 3 mole% based on the whole PHBH, the crystallization of the copolymer is promoted by the addition of kenaf fibers, whereby the temperature corresponding to the exothermic peak due to recrystallization during cooling becomes closer to the melting point of the copolymer whose 3-hydroxyhexanoate unit content is 3 mole% based on the whole PHBH. However, in cases where there is no exothermic peak due to recrystallization in the above crystallization/solidification behavior evaluation, the crystallization-promoting effect of the addition of kenaf fibers is not clear in some cases.

The composition of the invention which is obtained from kenaf fibers and a P3HA preferably satisfies the relation T_{h*} > The between the thermal deformation temperature (Tₕ) of the P3HA alone and the thermal deformation temperature (T_{h*}) of the composition comprising the kenaf fibers and the P3HA as determined for the respective samples prepared under the same conditions. When T_{h*} ≤ Tₕ, the state of dispersion of kenaf fibers in the composition obtained from the kenaf fibers and the P3HA may be inadequate in some cases, for example the composition contains a large number of bubbles or the fibers are forming aggregates, hence are not dispersed uniformly, or, in other cases, kenaf fibers may be showing only the extender or filler effect, like in the conventional art, or showing the nucleating agent effect only to a slight extent and making it difficult to attain an improvement in heat resistance.

The specific method of measuring the thermal deformation temperature is as described later herein in the examples section.

The composition of the invention which is obtained from kenaf fibers and a P3HA preferably gives a flexural modulus value, a maximum bending strength value and an IZOD impact value which are not lower than the corresponding values for a P3HA alone which has a weight average molecular weight (Mw) falling within the range of ± 10% of the weight average molecular weight (Mw) of the composition comprising the kenaf fibers and the P3HA, when the values are determined using the respective test specimens prepared using the same formulation and the same molding conditions.

When the physical property values of the composition are lower than the corresponding physical property values of the P3HA alone, the state of dispersion of kenaf fibers in the composition obtained from the kenaf fibers and the P3HA may be inadequate and, in some cases, the composition may be poor in strength and/or physical property balance, like in the prior art.

The same molding conditions so referred to herein are the molding conditions for preparing final test specimens for flexural modulus, maximum bending strength and IZOD impact value determinations, and the conditions under which the composition is palletized are excluded.

The specific methods of determining the flexural modulus, maximum bending strength, IZOD impact value and weight-average molecular weight are as described later herein in the examples section.

The composition of the invention which comprises kenaf fibers and a P3HA can be prepared by a method well known in the art.

As the method of melting a P3HA by heating and blending the same with kenaf fibers, there may be mentioned, for example, the mixing by mechanical stirring by means of a single screw extruder, twin screw extruder, kneader, gear pump, kneader roll, a tank equipped with a stirrer, etc. and the application of a static mixer in which distribution and confluence are repeated by means of flow guides, etc. In case of melting by heating, care should be taken in mixing to inhibit the molecular weight from decreasing due to thermal degradation.

It is also possible to dissolve a P3HA in a solvent in which it is soluble, followed by blending with kenaf fibers. In that case, the resin composition of the invention may be obtained by removing the solvent by allowing the mixture to stand at room temperature, for instance. The dissolving solvent to be used in that case is, for example, chloroform, ethyl acetate or the like. When such method is employed, the state of dispersion of kenaf fibers in the composition after evaporation of the solvent can be improved, for example, by opening the fibers in advance, for example, by grinding the fibers with a grinder or by subjecting the fibers to opening treatment using a carding machine, etc.

It is also possible to add kenaf fibers to a slurry obtained in the step of purifying a P3HA extracted from microbial cells by removing microbial debris and so forth. Thus, for example, there may be mentioned the case where kenaf fibers are added in the step of washing with methanol in the course of P3HA purification.

The composition of the invention which is obtained from kenaf fibers and a P3HA may be molded into pellets, blocks, films or sheets using such an extruder as mentioned above, or may be subjected to injection molding as well. For improving the dispersibility of kenaf fibers in the P3HA and/or the adhesion thereof to the P3HA, the composition may be once palletized and then the pellets may be molded again into films or sheets on an extruder or subjected to injection molding. Even when the kenaf fiber addition level is high, it is possible to form films or sheets by heating and kneading using a roll molding machine, as described hereinabove.

The films or sheets obtained from the composition of the invention are superior in drawdown characteristics upon melting and/or mold release characteristics as compared with the corresponding P3HA alone, so that mold vacuum forming thereof with heating can be easily conducted; it is also possible to subject the films or sheets to press molding.

The molded product derived from the composition of the invention which is obtained from kenaf fibers and a P3HA preferably has a percentage of the surface area occupied by kenaf fibers of not higher than 50% relative to the externally tangible surface area.

In case where the surface area ratio occupied by kenaf fibers is larger than 50%, when the products manufactured for use over a long period of time or the products manufactured for use in a water-rich environment may undergo cracking as a result of absorption of water by the kenaf fibers exposed on the surface and swelling of the same, although the situation depends on the shape of the molded products and the maximum fiber length and dispersibility of kenaf fibers.

The specific method of measuring the percentage of the area occupied by kenaf fibers relative to the molded product surface is as described later herein in the examples section.

In the composition of the invention as obtained from kenaf fibers and a P3HA, one or more of the additives known in the art may be incorporated at levels at which the effects of the invention will not be counteracted.

As the known additives, there may be mentioned those which are effective as thickening agents or crystal nucleating agents in general-purpose plastics, for example polyolefin resins such as polyethylene and polypropylene, aromatic polyesters such as polyethylene terephthalate and polybutylene terephthalate, etc., and in polylactic acid-based resins and other biodegradable resins such as aliphatic polyester resins, and the like. For example, there may be mentioned carbon black, calcium carbonate, silicon oxide and silicate salts, zinc white, high-site clay, kaolin, basic magnesium carbonate, mica, talc, pulverized quartz, diatomaceous earth, pulverized dolomite, titanium oxide, zinc oxide, antimony oxide, barium sulfate, calcium sulfate, alumina, calcium silicate, boron nitride, crosslinked high-molecular-weight polystyrene, rosin-based metal salts, glass fibers, whiskers, carbon fibers and other inorganic fibers, human hair, wool, bamboo fibers, pulp fibers and other organic fibers, and the like. Other substitute species derived from plants similar to kenaf, for example fibers of other annual herbs of the genus Hibiscus mutabilis of the family Malvaceae, and of annual herbs of the family Tiliaceae, may also be used. There may be incorporated, according to need, one or more of such secondary additives as colorants, such as pigments and dyes, inorganic or organic particles, stabilizers such as antioxidants and ultraviolet absorbers, lubricants, releasing agents, water repellants, antimicrobial agents and so forth. The above additives may be used singly or two or more of them may be used in combination.

It is possible to combinedly use a plasticizer in combination in the composition of the invention which is obtained from kenaf fibers and a P3HA at levels not leading to deterioration of the effects of the invention. The use of a plasticizer makes it possible to lower the melting viscosity during processing with heating, in particular in the step of extrusion, and suppress the decrease in molecular weight due to shearing heat generation, and the like. In certain cases, it is possible to expect improvement of the crystallization rate and, furthermore, to provide films or sheets, which are obtained as molded products, with stretching properties, etc.

Preferred as the plasticizer are ether plasticizers, ester plasticizers, phthalate plasticizers, phosphate plasticizers, and the like. More preferred from the viewpoint of good compatibility with polyesters are ether plasticizers and ester plasticizers.

As the ether plasticizers, there may be mentioned, for example, polyethylene glycol, polypropylene glycol, polytetramethylene glycol and like polyoxyalkylene glycols.

As the ester plasticizers, there may be mentioned esters of aliphatic dicarboxylic acids and aliphatic alcohols, etc. As the aliphatic dicarboxylic acids, there may be mentioned, for example, oxalic acid, succinic acid, sebacic acid, adipic acid and the like. As the aliphatic alcohols, there may be mentioned, for example, monohydric alcohols such as methanol, ethanol, n-propanol, isopropanol, n-hexanol, n-octanol, 2-ethylhexanol, n-dodecanol and stearyl alcohol, dihydric alcohols such as ethylene glycol, 1,2-propylene glycol, 1,3-propylene glycol, 1,3-butanediol, 1,5-pentanediol, 1,6-hexanediol, diethylene glycol, neopentyl glycol and polyethylene glycol, and polyhydric alcohols such as glycerol, trimethylolpropane and pentaerythritol. There may further be mentioned those copolymers, di-copolymers, tri-copolymers, tetra-copolymers and so forth which comprise a combination of two or more of the above-mentioned polyethers and polyesters, as well as blends composed of two or more of such homopolymers and copolymers. Mention may further be made of esterified hydroxycarboxylic acids and the like.

As the phthalate plasticizers, there may be mentioned, for example, dimethyl phthalate, diethyl phthalate, dibutyl phthalate, di-2-ethylhexyl phthalate, diisononyl phthalate, and the like.

As the phosphate plasticizers, there may be mentioned, for example, tricresyl phosphate, tributyl phosphate, and the like.

The plasticizer mentioned above is not limited to those and may comprise either one or two or more species.

The composition of the invention obtained from kenaf fibers and a P3HA can be molded into such molded products as papers, films, sheets, tubes, plates or boards, bars or rods, containers, bags and parts and, when combined with various fibers, yarns or threads, ropes, woven fabrics, knitted goods, nonwoven fabrics, papers, films, sheets, tubes, plates or boards, bars or rods, containers, bags, parts, foamed materials and the like, each comprising a single substance other than the above-mentioned composition, to give composite materials, the physical properties of each single substance cane be improved. The thus-obtained molded products can be used suitably in various fields, for example in agriculture, fishery, forestry, horticulture, medicine, sanitary supplies, clothes, non-clothes, packaging materials, automobile industry, building materials, and the like.

The present invention can provide a plant origin composition and a molded product thereof excellent in processability, strength, impact resistance, heat resistance and water resistance that can hardly be attained with the above-mentioned chemically synthesized aliphatic polyesters or natural polymers such as starch. The invention can also provide a composition and a molded product thereof which, when discarded, are degradable under the action of microorganisms and the like in an aerobic or anaerobic environment and are returned to the carbon cycle system on the earth. Furthermore, the invention provides a plant origin composition and a molded product thereof, which can positively fix carbon dioxide on the earth and can be expected to contribute to the prevention of global warming.

The present invention can provide a plant origin composition and a molded product thereof excellent in processability, strength, impact resistance, heat resistance and water resistance that can hardly be attained with the above-mentioned chemically synthesized aliphatic polyesters or natural polymers such as starch. The invention can also provide a composition and a molded product thereof which, when discarded, are degradable under the action of microorganisms and the like in an aerobic or anaerobic environment and are returned to the carbon cycle system on the earth. Furthermore, the invention provides a plant origin composition and a molded product thereof, which can positively fix carbon dioxide on the earth and can be expected to contribute to the prevention of global warming.

### BEST MODE FOR CARRYING OUT THE INVENTION

The following examples illustrate the composition of the invention obtained from kenaf fibers and a P3HA and the molded product thereof in further detail. Such examples are, however, by no means limitative of the scope of the invention.

The resin and others described herein are abbreviated as follows:
PHBH: Poly(3-hydroxybutyrate-co-3-hydroxyhexanoate);
HH percentage: Mole fraction (mol %) of 3-hydroxyhexanoate in PHBH;
Composition AX: Composition obtained from kenaf fibers and PHBH and molded product derived therefrom.

### <Molecular weight measurement method>

The weight average molecular weight Mw value of each P3HA composition or molded product was determined on the polystyrene equivalent basis by GPC. The GPC apparatus used was the system CCP & 8020 (product of Tosoh Corporation), and the column used was GPC K-805L (product of Showa Denko K.K.). The column temperature was set at 40°C, 200 µl of a solution prepared by dissolving 20 mg of the composition or molded product in 10 ml of chloroform was injected into the column, and the Mw was determined.

### <Kenaf fiber maximum fiber length measurement method>

A surface or an arbitrary partial section of the composition or molded product was observed under an optical microscope, and the maximum fiber length length was measured in an observation field range (at least a total of 400 mm²).

### <Method of determining the percentage of the kenaf fiber-occupied area on the molded product surface>

An arbitrary portion of the molded product surface was photographed over a visual field of about 4 mm² under a scanning electron microscope and, after printing, the portions where kenaf fibers were exposed were cut out of the paper and weighed (W1), and the proportion thereof relative to the total weight (W), namely (W1/W) x 100, was reported as the percentage of the kenaf fiber-occupied area on the surface of the molded product.

### <Melting temperature (Tm) and crystallization temperature (Tc) measurement method>

Using a Seiko Denshi Kogyo's DSC 200 differential scanning calorimeter, the PHBH or composition AX sample, each weighing about 1 to 10 mg, was heated at a rate of 10°C/min from 0°C to 200°C for sufficient melting (1st run), then cooled to 0°C at a rate of 10°C/min (cooling), and again heated to 200°C at a rate of 10°C/min. (2nd run). The maximum peak on the endothermic curve as resulting from melting of the resin in the 1st run was taken as melting temperature Tm1, the maximum peak on the exothermic curve as resulting from recrystallization in the step of cooling as Tc1, that in the 2nd run as resulting from recrystallization as Tc2, and the maximum peak on the endothermic curve as resulting from melting of the resin as Tm2. In cases where there is a Tc1, the resin can be said to easily crystallize. Since the PHBH and compositions AX used in the practice of the invention are copolymers, their endothermic curves show one or a plurality of peaks. When there is a plurality of peaks, the peak top temperature on the higher temperature side is taken as the melting temperature Tm.

### <Flexural modulus and maximum bending strength measurement method>

Tests were carried out according to JIS K 7203 using a Shimadzu Corporation's AUTOGRAPH 10TB.

### <IZOD impact value measurement method>

Tests were carried out according to JIS K 7110.

### <Heat deformation temperature (HDT) measurement method under high load conditions>

The heat deformation temperature under a load of 1.8 MPa was measured according to JIS K 7207 (Method A) using a Toyo Seiki Seisaku-sho, LTD.'s HDT & VSPT tester.

### <Water resistance evaluation method>

The molded product sample was immersed in water and allowed to stand in that state for about 1 month and, then, the surface condition was visually observed. The evaluation criteria employed on that occasion are as follows: Excellent: Little changes in surface condition as compared with the condition before immersion; Fair: Some portions on the surface seem swollen; Poor: The molded product before immersion can hardly be reminded of.

### (Example 1)

5 parts by weight of kenaf fibers with a fiber length of 30 mm after drying in a heating drier under the conditions of 60°C x 3 hours were added to 100 parts by weight of PHBH (HH percentage 8.4 mol %; Mw = 1,030,000) produced from suitably selected raw materials under appropriately adjusted cultivation conditions using, as microorganisms, Alcaligenes eutrophus AC32 (J. Bacteriol., 179, 4821 (1997)) produced by introduction of the Aeromonas caviae-derived PHA synthetase gene into Alcaligenes eutrophus. After hand blending, the mixture was pelletized on a single screw extruder equipped with a kneader (Kasamatsu Kako Kenkyusyo's universal extruder for laboratory use, ∅ 35 mm, pelletizing temperature 150°C) to give a pelletized composition A1 (Mw = 810,000).

This pelletized composition A1 was subjected to injection molding (Toshiba Corporation's 80-t injection molding machine, injection temperature 140°C) and 1/4 inch dumbbell specimens were prepared (good injection-molded products were obtained). The composition A1-derived dumbbells were measured for Mw, maximum kenaf fiber length in the moldings, kenaf fiber percentage on the surface of the moldings, Tm1 Tm2, Tc1, Tc2, flexural modulus, maximum bending strength, IZOD impact value, HDT, and water resistance. The results obtained are shown in Table 1.

The composition A1 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

In Table 1, "numerical value <" and "numerical value >" represent "a measurement value exceeding the numerical value" and "that below the numerical value", respectively.

**Table 1**

| | Example 1 | Example 2 | Example 3 | Example 4 | Example 5 | Example 6 | Example 7 |
|---|---|---|---|---|---|---|---|
| PHBH resin (part) | 100 | 100 | 100 | 100 | 100 | 100 | 100 |
| Kenaf fiber (part) | 5 | 10 | 20 | 50 | 5 | 10 | 20 |
| Molecular weight determined from molded product (Mw) | 700000 | 650000 | 550000 | 420000 | 350000 | 320000 | 300000 |
| Maximum kenaf fiber length in molded product (mm) | 10> | 10> | 10> | 10> | 15> | 15> | 15> |
| Kenaf fiber-occupied area percentage | | | | | | | |
| on molded product surface (%) | 1> | 1> | 15> | 35> | 1> | 1> | 10> |
| Tm1 (°C) | 142 | 142 | 142 | 141 | 141 | 142 | 141 |
| Tm2 (°C) | 141 | 141 | 141 | 141 | 141 | 141 | 141 |
| Tc1 (°C) | 59 | 64 | 66 | 67 | 62 | 67 | 68 |
| Tc2 (°C) | None | None | None | None | None | None | None |
| Flexural modulus (MPa) | 1250< | 1580< | 1620< | 1730< | 1380< | 1610< | 1700< |
| Maximum bending strength (MPa) | 33< | 36< | 37< | 37< | 35< | 37< | 36< |
| IZODimpact value (J/m) | 31 < | 33< | 34< | 35< | 22< | 24< | 24< |
| HDT(1.8MPa) (°C) | 74< | 80< | 82< | 82< | 75< | 82< | 82< |
| Water resistance | Excellent | Excellent | Excellent | Fair | Excellent | Excellent | Excellent |
| | Compar. Ex. 1 | Compar. Ex. 2 | Compar. Ex. 3 | | | | |
| PHBH resin (part) | 100 | 100 | 100 | | | | |
| Kenaf fiber (part) | 0 | 0 | 0 | | | | |
| Molecular weight determined from molded product (Mw) | 240000 | 440000 | 680000 | | | | |
| Maximum kenaf fiber length in molded product (mm) | - | - | - | | | | |
| Kenaf fiber-occupied area percentage on molded product surface (%) | - | - | - | | | | |
| Tm1 (°C) | 142 | 143 | 142 | | | | |
| Tm2 (°C) | 142 | 141 | 141 | | | | |
| Tc1 (°C) | None | None | None | | | | |
| Tc2 (°C) | 56 | 65 | 66 | | | | |
| Flexural modulus (MPa) | 1300 | 1160 | 1080 | | | | |
| Maximum bending strength (MPa) | 35 | 32 | 31 | | | | |
| IZODimpact value (J/m) | 16 | 22 | 27 | | | | |
| HDT(1.8MPa) (°C) | 67 | 66 | 65 | | | | |
| Water resistance | Excellent | Excellent | Excellent | | | | |

### (Example 2)

Composition A2-derived injection-molded dumbbells were obtained in the same manner as in Example 1 except that the addition amount of kenaf fibers was changed to 10 parts by weight. The measurement results are shown in Table 1. The composition A2 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

### (Example 3)

Composition A3-derived injection-molded dumbbells were obtained in the same manner as in Example 1 except that the addition amount of kenaf fibers was changed to 20 parts by weight. The measurement results are shown in Table 1. The composition A3 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

### (Example 4)

Composition A4-derived injection-molded dumbbells were obtained in the same manner as in Example 1 except that the addition amount of kenaf fibers was changed to 50 parts by weight. The measurement results are shown in Table 1. The composition A4 was improved in rate of crystallization by the addition of kenaf fibers as compared with the kenaf fiber-free counterpart, and the flexural modulus, maximum bending strength, IZOD impact value as well as the heat resistance were also improved. As for the water resistance, portions showing slightly swollen kenaf fibers were observed on the molded product surface, but that is of no particular matter on practical use.

### (Example 5)

Composition A5-derived injection-molded dumbbells were obtained in the same manner as in Example 1 except that PHBH (HH percentage 8.4 mol %; Mw = 510,000) produced from suitably selected raw materials under appropriately adjusted cultivation conditions using, as microorganisms, Alcaligenes eutrophus AC32 (J. Bacteriol., 179, 4821 (1997)) produced by introduction of the Aeromonas caviae-derived PHA synthetase gene into Alcaligenes eutrophus was used for producing the molded products. The measurement results are shown in Table 1. The composition A5 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

### (Example 6)

Composition A6-derived injection-molded dumbbells having a different Mw were obtained in the same manner as in Example 5 except that the addition amount of kenaf fibers was changed to 10 parts by weight. The measurement results are shown in Table 1. The composition A6 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

### (Example 7)

Composition A7-derived injection-molded dumbbells having a different Mw were obtained in the same manner as in Example 5 except that the addition amount of kenaf fibers was changed to 20 parts by weight. The measurement results are shown in Table 1. The composition A7 was improved in rate of crystallization by the addition of kenaf fibers as compared with the kenaf fiber-free counterpart, and the flexural modulus, maximum bending strength, IZOD impact value as well as the heat resistance were also improved. The water resistance was also good.

### (Comparative Example 1)

Pellets with Mw = 280,000 were obtained, at a pelletizing temperature of 140°C, from PHBH (HH percentage 8.4 mol %; Mw = 300,000) produced from suitably selected raw materials under appropriately adjusted cultivation conditions using, as microorganisms, Alcaligenes eutrophus AC32 (J. Bacteriol., 179, 4821 (1997)) produced by introduction of the Aeromonas caviae-derived PHA synthetase gene into Alcaligenes eutrophus, without adding kenaf fibers.

This pelletized PHBH was subjected to injection molding in the same manner as in Example 1, and 1/4 inch dumbbell specimens were prepared. These dumbbells were measured for Mw, Tm1, Tm2, Tc1, Tc2, flexural modulus, maximum bending strength, IZOD impact value, HDT, and water resistance. The results obtained are shown in Table 1. Because of the absence of kenaf fibers, the crystallization had not been promoted, hence they were inferior in flexural modulus, maximum bending strength, IZOD impact value and heat resistance as compared with the composition A7 having a similar Mw. The water resistance was good.

### (Comparative Example 2)

PHBH-based, injection-molded dumbbells were prepared in the same manner as in Comparative Example 1 except that pellets with Mw = 500,000 were obtained, at a pelletizing temperature of 140°C, from PHBH (HH percentage 8.4 mol %; Mw = 550,000) produced from suitably selected raw materials under appropriately adjusted cultivation, without adding kenaf fibers. The results obtained are shown in Table 1. Because of the absence of kenaf fibers, the crystallization had not been promoted, hence they were inferior in flexural modulus, maximum bending strength, IZOD impact value and heat resistance as compared with the composition A4 or A5 having a similar Mw. The water resistance was good.

### (Comparative Example 3)

PHBH-based, injection-molded dumbbells were prepared in the same manner as in Comparative Example 1 except that pellets with Mw = 770,000 were obtained, at a pelletizing temperature of 140°C, from PHBH (HH percentage 8.4 mol %; Mw = 850,000) produced from suitably selected raw materials under appropriately adjusted cultivation, without adding kenaf fibers. The results obtained are shown in Table 1. Because of the absence of kenaf fibers, the crystallization had not been promoted, hence they were inferior in flexural modulus, maximum bending strength, IZOD impact value and heat resistance as compared with the composition A1 or A2 having a similar Mw. The water resistance was good.

### (Example 8)

The composition A1 prepared in Example 1 was subjected to heating and molding on a roll molding machine to give a 600-µm-thick sheet. The kenaf fibers in the sheet had a maximum fiber length of not longer than 10 mm. This sheet was molded on a vacuum heating/molding machine equipped with a mold for forming daily dish containers. Drawdown was slight in the step of heating, the mold release characteristics were good, and uniform daily dish containers were obtained.

### (Comparative Example 4)

The PHBH pellets prepared in Comparative Example 1 were subjected to heating and molding on a roll molding machine to give a 600-µm-thick sheet. This sheet was molded on a vacuum heating/molding machine equipped with a mold for forming daily dish containers. Molded products were indeed obtained but, in some cases, drawdown was observed in the step of heating or the sheet stuck to the mold; the sheet broke in extreme cases.

### INDUSTRIAL APPLICABILITY

The present invention can provide a plant origin composition and a molded product thereof excellent in processability, strength, impact resistance, heat resistance and water resistance that can hardly be attained with the above-mentioned chemically synthesized aliphatic polyesters or natural polymers such as starch. The invention can also provide a composition and a molded product thereof which, when discarded, are degradable under the action of microorganisms and the like in an aerobic or anaerobic environment and are returned to the carbon cycle system on the earth. Furthermore, the invention provides a plant origin composition and a molded product thereof, which can positively fix carbon dioxide on the earth and can be expected to contribute to the prevention of global warming.

## Claims

1. A composition
which comprises kenaf fibers and a poly(3-hydroxyalkanoate) (abbreviation: P3HA) produced by microorganisms and comprising a repeating unit represented by the formula (1):
[-O-CHR-CH₂-CO-]
in the formula, R represents an alkyl group represented by CₙH₂ₙ₊₁ with n representing an integer of 1 to 15.

2. The composition according to Claim 1,
wherein the P3HA is poly(3-hydroxybutyrate-co-3-hydroxyhexanoate) comprising a repeating unit of the above formula (1) with, in R, n = 1 and 3.

3. The composition according to Claim 2,
wherein the copolymer component composition ratio in the poly(3-hydroxybutyrate-co-3-hydroxyhexanoate) is 3-hydroxybutyrate/3-hydroxyhexanoate = 99/1 to 80/20 (mol/mol).

4. The composition according to any one of Claims 1 to 3,
wherein the kenaf fibers account for 1 to 70% by weight and the P3HA accounts for 99 to 30% by weight based on the whole composition.

5. The composition according to any one of Claims 1 to 4,
wherein the maximum fiber length of the kenaf fibers is not longer than 20 mm.

6. The composition according to any one of Claims 1 to 5,
wherein the DSC curve drawn by differential scanning calorimetry shows an exothermic peak due to crystallization in the case that the temperature is lowered from a level higher by 30°C than the melting point of the P3HA alone at a rate of 10°C/minute, and the heat deformation temperature (Tₕ) of the P3HA alone and the heat deformation temperature (T_{h*}) of the composition comprising the kenaf fibers and the P3HA as determined for the respective samples prepared under the same conditions show the relation T_{h*} > Tₕ, wherein the heat deformation temperatures are measured under a load of 1.8 MPa according to JIS K 7207 (Method A).

7. The composition according to any one of Claims 1 to 6,
wherein the flexural modulus value, maximum bending strength value and IZOD impact value thereof are not lower than the corresponding values for a P3HA alone having a weight average molecular weight (Mw) falling within the range of ± 10% of the weight average molecular weight (Mw) of the composition comprising the kenaf fibers and the P3HA, if the values are determined using the respective test specimens prepared using the same formulation and the same molding conditions, wherein the flexural modulus and maximum bending strength are measured according to JIS K 7203, and the IZOD impact value is measured according to JIS K 7110.

8. An injection-molded product
which comprises the composition according to any one of Claims 1 to 7.

9. A film- or sheet-shaped molded product comprising the composition according to any one of Claims 1 to 7, or a press-molded product using the same.

10. A molded product
which comprises the composition according to any one of Claims 1 to 7,
the percentage of the area occupied by the kenaf fibers on the molded product surface being not more than 50%.

## Patentansprüche

1. Zusammensetzung, welche Kenaffasern und ein Poly(3-hydroxyalkanoat) (Abkürzung: P3HA) umfaßt, das durch Mikroorganismen erzeugt ist und eine sich wiederholende Einheit umfaßt, die dargestellt ist durch die Formel (1):
[-O-CHR-CH₂-CO-],
wobei in der Formel R eine Alkylgruppe darstellt, die dargestellt ist durch CₙH₂ₙ₊₁, wobei n eine ganze Zahl von 1 bis 15 darstellt.

2. Zusammensetzung nach Anspruch 1,
wobei das P3HA Poly(3-hydroxybutyrat-co-3-hydroxyhexanoat) ist, das eine sich wiederholende Einheit der obigen Formel (1) umfaßt, wobei, in R, n = 1 und 3 ist.

3. Zusammensetzung nach Anspruch 2,
wobei das Copolymerbestandteilzusammensetzungsverhältnis in dem Poly(3-hydroxyburyrate-co-3-hydroxyhexanoat) 3-Hydroxybutyrat / 3-Hydroxyhexanoat = 99/1 bis 80/20 (mol/mol) ist.

4. Zusammensetzung nach einem der Ansprüche 1 bis 3,
wobei, bezogen auf die Gesamtzusammensetzung, die Kenaffasern 1 bis 70 Gew.-% ausmachen und das P3HA 99 bis 30 Gew.-% ausmacht.

5. Zusammensetzung nach einem der Ansprüche 1 bis 4,
wobei die maximale Faserlänge der Kenaffasern nicht länger als 20 mm ist.

6. Zusammensetzung nach einem der Ansprüche 1 bis 5,
wobei die durch Differential-Scanning-Kalorimetrie erhaltene DSC-Kurve einen exothermen Peak aufgrund von Kristallisation für den Fall zeigt, daß die Temperatur von einem Niveau, das 30°C höher als der Schmelzpunkt von P3HA allein ist, bei einer Geschwindigkeit von 10°C/Minute abgesenkt wird, und die Wärmeverformungstemperatur (Tₕ) des P3HA allein und die Wärmedeformationstemperatur (Tₕ₊) der Zusammensetzung, welche die Kenaffasern und das P3HA umfaßt, wie bestimmt für die jeweiligen Proben, die unter denselben Bedingungen hergestellt sind, ein Verhältnis Tₕ₊ > Tₕ zeigen, wobei die Wärmedeformationstemperaturen gemessen werden unter einer Belastung von 1,8 MPa gemäß JIS K 7207 (Verfahren A).

7. Zusammensetzung nach einem der Ansprüche 1 bis 6,
wobei der Biegemodulwert, der Maximalbiegestärkewert und der IZOD-Schlagwert davon nicht geringer als die entsprechenden Werte für ein P3HA allein mit einem durchschnittlichen Molekulargewicht (Mw) sind, das in den Bereich von +/- 10% des durchschnittlichen Molekulargewichts (Mw) der Zusammensetzung fällt, die die Kenaffasern und das P3HA umfaßt, wenn die Werte bestimmt sind unter Verwendung der jeweiligen Testmuster, die hergestellt sind unter Verwendung derselben Formulierungs- und derselben Formungsbedingungen, wobei das Biegemodul und die Maximalbiegestärke gemessen sind gemäß JIS K 7203 und der IZOD-Schlagwert gemessen ist gemäß JIS K 7110.

8. Spritzformprodukt, welches die Zusammensetzung nach einem der Ansprüche 1 bis 7 umfaßt.

9. Folien- oder blattförmiges Formprodukt, umfassend die Zusammensetzung nach einem der Ansprüche 1 bis 7 oder ein Preßformprodukt unter Verwendung derselben.

10. Formprodukt, welches die Zusammensetzung der Ansprüche 1 bis 7 umfaßt,
wobei der Prozentanteil der Fläche, welche durch die Kenaffasern auf der Formproduktoberfläche besetzt ist, nicht größer als 50% ist.

## Revendications

1. Composition qui comprend des fibres de kenaf et un poly(3-hydroxyalcanoate) (abréviation : P3HA) produit par des micro-organismes et comprenant une unité répétée représentée par la formule (1) :
[-O-CHR-CH₂-CO-]
dans la formule, R représente un groupe alkyle représenté par CₙH₂ₙ₊₁, n représentant un entier de 1 à 15.

2. Composition selon la revendication 1, où le P3HA est un poly(3-hydroxybutyrate-co-3-hydroxyhexanoate) comprenant une unité répétée de la formule (1) ci-dessus avec, dans R, n = 1 et 3.

3. Composition selon la revendication 2, où le rapport de composition des composants de copolymère dans le poly(3-hydroxybutyrate-co-3-hydroxyhexanoate) est 3-hydroxybutyrate/3-hydroxyhexanoate = 99/1 à 80/20 (mol/mol).

4. Composition selon l'une quelconque des revendications 1 à 3, où les fibres de kenaf représentent 1 à 70 % en poids et le P3HA représente 99 à 30 % en poids sur la base de la composition totale.

5. Composition selon l'une quelconque des revendications 1 à 4, où la longueur de fibre maximale des fibres de kenaf n'est pas supérieure à 20 mm.

6. Composition selon l'une quelconque des revendications 1 à 5, où la courbe de DSC tracée par calorimétrie différentielle à balayage présente un pic exothermique dû à la cristallisation dans le cas où la température est abaissée d'un niveau supérieur de 30°C au point de fusion du P3HA seul à une vitesse de 10°C/min, et la température de déformation thermique (Tₕ) du P3HA seul et la température de déformation thermique (T_{h*}) de la composition comprenant les fibres de kenaf et le P3HA telles qu'elles sont déterminées pour les échantillons respectifs préparés dans les mêmes conditions présentent la relation T_{h*} > Tₕ, où les températures de déformation thermique sont mesurées sous une charge de 1,8 MPa selon JIS K 7207 (procédé A).

7. Composition selon l'une quelconque des revendications 1 à 6, où sa valeur du module en flexion, sa valeur de la résistance à la flexion maximale et sa valeur de choc IZOD ne sont pas inférieures aux valeurs correspondantes pour un P3HA seul ayant une masse moléculaire moyenne en poids (Mp) située dans la plage de ± 10 % de la masse moléculaire moyenne en poids (Mp) de la composition comprenant les fibres de kenaf et le P3HA, si les valeurs sont déterminées au moyen des éprouvettes respectives préparées en utilisant la même formulation et les mêmes conditions de moulage, où le module en flexion et la résistance à la flexion maximale sont mesurés selon JIS K 7203, et la valeur de choc IZOD est mesurée selon JIS K 7110.

8. Produit moulé par injection qui comprend la composition selon l'une quelconque des revendications 1 à 7.

9. Produit moulé en forme de film ou de feuille comprenant la composition selon l'une quelconque des revendications 1 à 7, ou produit moulé par compression l'utilisant.

10. Produit moulé qui comprend la composition selon l'une quelconque des revendications 1 à 7, le pourcentage de l'aire occupée par les fibres de kenaf sur la surface du produit moulé n'étant pas supérieur à 50 %.
